# EUROPEAN PATENT APPLICATION

(11) **EP 4 201 522 A1**
(43) Date of publication of application: **28.06.2023**
(21) Application number: 22216343.8
(22) Date of filing: 23.12.2022
(51) Int. Cl.: B01J 23/96, B01D 1/06, C22B 11/00, C22B 7/00

(54) **METHOD FOR PROCESSING LIQUID PHARMACHEMICAL AND/OR FINE CHEMICAL WASTE COMPRISING ORGANIC SOLVENTS AND NOBLE METALS**

(30) Priority: 24.12.2021 BE 202106064
(71) Applicant: Indaver nv, 9130 Beveren (BE)
(72) Inventor: KOYEN, Niels, 9130 Beveren (BE); VAN ZUNDERT, Wouter, 9130 Beveren (BE)
(74) Representative: Brantsandpatents bv

(57) **Abstract**

Method for processing liquid pharmachemical and/or fine chemical waste comprising organic solvents and noble metals, in particular platinum-group metals, such as platinum, palladium, rhodium and/or ruthenium, comprising the following sequential steps: feeding liquid pharmachemical and/or fine chemical waste comprising organic solvents and noble metals into a container, introducing liquid waste from the container into a feed tank, feeding liquid waste from the feed tank to a thin film evaporator, discharging the vapor fraction, comprising organic solvents, to a condenser, wherein a distillate is formed, which is used for the recovery of organic solvents, collecting concentrated residual fractions comprising noble metals. In particular, the collected concentrated residual fraction formed after evaporation of the organic solvents will be used for the recovery of noble metals, in particular platinum, palladium, rhodium and/or ruthenium.

## Description

### TECHNICAL FIELD

The invention relates to the processing of liquid pharmachemical and/or fine chemical waste, more particularly liquid waste comprising organic solvents and noble metals.

### PRIOR ART

Homogeneous catalysts are catalysts that are in the same phase as the reactants. In the pharmaceutical and chemical industries, these catalysts often consist of organometallic complexes that are dissolved in the reaction mixture. After the reaction, the catalysts enter the liquid phase of the wastes, whether or not partially. These fluids typically have complex compositions and can be flammable, toxic or corrosive.

Certain homogeneous catalysts contain valuable metals, such as noble metals. Noble metals are rare elements of high economic value. They are the most stable metals, making them very useful catalysts. Noble metals are among the rarest elements on earth, with mining in Russia and South Africa being the largest primary producers.

The most commonly used noble metals for homogeneous catalysts are platinum-group metals, such as palladium, rhodium, platinum and/or ruthenium. Gold, silver, iridium and osmium are also used. Concentrations as low as a few ppm can be economical to recover. These catalysts are increasingly used due to their specific properties, such as selectivity and activity, which enable new chemistry. Because of the unique chemical properties on the one hand and the rarity on the other hand, noble metals are very expensive. Recovery of this type of metals from waste is therefore an ecologically and economically interesting solution for European large-scale industry.

These noble metals are often lost in industrial waste because they are dissolved in the liquid fractions, such as in organic solvents. This waste is then often only subjected to a solvent recovery system where the focus is on recovering the organic solvents for reuse, but where the valuable noble metals are lost in the concentrated residual fraction.

JP03267188 relates to a method for extracting reusable volatile components from a waste liquid containing an organic solvent such as paint, thinner, printing ink, etc., and fractionating the volatile components thereof to obtain a desired boiling point.

A known problem is that such wastes from the pharmacochemical and/or fine chemical industries, comprising organic solvents and valuable noble metals, are thus subjected by known facilities to only one recovery system, whereas two or more valuable fractions can be distinguished.

There is therefore a need for an optimized recovery of the various fractions from liquid pharmachemical and/or fine chemical waste. The present invention aims at least to solve the above-mentioned problem. The object of the invention is to provide a method which eliminates this drawback.

### SUMMARY OF THE INVENTION

In a first aspect, the present invention relates to a method according to claim 1.

This method aims to provide a method for processing liquid waste, in which the recovery of noble metals, such as platinum, palladium, rhodium and/or ruthenium, and the recycling of organic solvents are combined through an evaporation process wherein the noble metals precipitate in a concentrated residual fraction. Thus, the method offers a constant and sustainable source of noble metals, which reduces the dependence on raw materials of pharmachemical and/or fine chemical companies from outside Europe.

Preferred embodiments of the method are set out in claims 2-14.

In a second aspect, the present invention relates to the use of a method for processing liquid waste and recovering a residual fraction according to claim 15.

This use results in an ecologically and economically advantageous processing of liquid waste from the pharmachemical and/or fine chemical industry because different fractions of the waste can be recovered for further reprocessing with reuse in the pharmachemical and/or fine chemical industry as the aim. The use reduces the need to purchase valuable noble metals, in particular platinum-group metals, such as platinum, palladium, rhodium and/or ruthenium, from outside Europe. The use makes it possible to combine the recovery of these valuable noble metals with the recovery of organic solvents or with energy recovery from the organic solvents.

### DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

The term "residual fraction" refers to the concentrate fraction obtained after evaporation.

The term "feed tank" is intended to mean any tank suitable for holding liquid waste, and suitable for feeding that liquid waste to an evaporator, such as storage tanks.

The terms "wastes" and "liquid wastes" as used in the text all refer to liquid pharmachemical and/or fine chemical wastes, which are the subject of the present invention.

The term "noble metals" as used in the text refers to elements that are generally regarded as noble metals in the art, namely ruthenium (Ru), rhodium (Rh), palladium (Pd), osmium (Os), iridium (Ir), platinum (Pt), gold (Au) and silver (Ag). The term "noble metals, in particular platinum-group metals" as used in the text refers to noble metals belonging to the platinum-group metals, namely ruthenium (Ru), rhodium (Rh), palladium (Pd), osmium (Os), iridium (Ir), platinum (Pt).

The term "distillation installation," as used in the text, refers to an installation suitable for separating components or substances from a liquid mixture by means of (selective) boiling and possibly condensation. A distillation installation preferably comprises an evaporator and a condenser. The liquid mixture, in this context the liquid wastes, is separated into a vapor fraction and a residual fraction (or concentrate fraction) in the evaporator, after which the vapor fraction is condensed in the condenser. Non-limiting examples of evaporators are thin film evaporator, falling film evaporator, short path evaporator, and batch evaporator.

The term "condenser" as used in the text refers to a heat exchanger used to at least partially condense a gaseous substance, in this context a vapor fraction, into a liquid state by cooling.

The unit "barg" refers to the gauge pressure, namely the measured pressure, as measured by a barometer, considered in relation to atmospheric pressure.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of a quantity used where the term "about" or "around" is used, is itself specifically disclosed.

The terms "comprise," "comprising," "consist of," "consisting of," "provided with," "have," "having," "include," "including," "contain," "containing" are synonyms and are inclusive or open terms that indicate the presence of what follows, and which do not exclude or prevent the presence of other components, characteristics, elements, members, steps, as known from or disclosed in the prior art.

Quoting numerical intervals by endpoints comprises all integers, fractions and/or real numbers between the endpoints, these endpoints included.

In a first aspect, the invention relates to a method for processing liquid pharmachemical and/or fine chemical waste comprising organic solvents and noble metals, in particular platinum-group metals, such as platinum, palladium, rhodium and/or ruthenium.

In a preferred embodiment, the liquid pharmachemical and/or fine chemical wastes originate from chemical processes using noble metals as catalysts, preferably homogeneous catalysts.

In an embodiment, the liquid pharmachemical and/or fine chemical wastes also comprise water.

Examples of noble metals present in the liquid pharmachemical and/or fine chemical wastes of the present invention are ruthenium (Ru), rhodium (Rh), palladium (Pd), osmium (Os), iridium (Ir), platinum (Pt), gold (Au) and silver (Ag). In a preferred embodiment, the noble metals are noble metals belonging to the platinum-group metals, namely ruthenium (Ru), rhodium (Rh), palladium (Pd), osmium (Os), iridium (Ir), platinum (Pt). In a further preferred embodiment, the noble metals are selected from the list of: ruthenium (Ru), rhodium (Rh), palladium (Pd), platinum (Pt), or a combination thereof, preferably the noble metals are selected from the list of: ruthenium (Ru), and/or palladium (Pd), more preferably the noble metals are selected from the list of: ruthenium (Ru) or palladium (Pd).

In a preferred embodiment, the liquid pharmachemical and/or fine chemical wastes comprise palladium as noble metal.

In a preferred embodiment, the liquid pharmachemical and/or fine chemical wastes comprise ruthenium as noble metal.

Examples of organic solvents that may be present in the liquid pharmachemical and/or fine chemical waste are: aniline, acetic acid, acetone, acetonitrile, benzene, bromobenzene, butanol, butanone, chloroform, cyclohexane, cyclopentane, dichloromethane, diethyl ether, diglyme, 1,2-dimethoxyethane, dimethylformamide, dimethyl sulfoxide, dioxane, ethanol, ethyl acetate, ethylene bromide, ethylenediamide, isopropanol, isopropyl acetate, carbon tetrachloride, methanol, methyl isobutyl ketone, formic acid, morpholine, nitrobenzene, N-methylpyrrolidone, pentane, propanol, pyridine, tetrahydrofuran, toluene, and xylene.

In a preferred embodiment, the method comprises the steps of:
- introducing liquid waste comprising organic solvents and noble metals into a feed tank;
- feeding liquid waste from the feed tank to an evaporator selected from the list of: a thin film evaporator, a falling film evaporator, a short path evaporator, or a batch evaporator;
- discharging the vapor fraction, comprising organic solvents, to a condenser;
- collection of a concentrated residual fraction.

In a preferred embodiment, the liquid pharmachemical and/or fine chemical waste is fed from the feed tank to a thin film evaporator.

According to a further preferred embodiment, the method comprises the steps of:
- introducing liquid waste comprising organic solvents and noble metals into a feed tank;
- feeding liquid waste from the feed tank to a thin film evaporator;
- discharging the vapor fraction, comprising organic solvents, to a condenser;
- collection of concentrated residual fractions.

The liquid waste is preferably supplied in a container containing a top and bottom connection. The container is connected to a gas network by connecting the top connection to a coupling piece, wherein the container is placed under an overpressure of between 0.18 and 0.22 barg. The container can then be connected to the feed tank by connecting the bottom connection to a suction line of a discharge pump. The liquid waste is then supplied to the feed tank by means of the discharge pump and a dip pipe. During the pumping of the liquid waste, the container remains at overpressure, monitored by means of a flow meter.

When the contents of the container have been completely discharged into the feed tank the pumping of the liquid waste is stopped and the container is vented to the gas network. When the pressure in the container is sufficiently low the manhole of the container is opened and a rinsing means [in Dutch: spoeltol] is placed in the manhole. A rinsing program can then be selected. After the start of the rinsing program, the discharge pump is activated again to drain the rinsing water, together with the residues, to the feed tank. After the rinsing program has stopped, the discharge pump also stops. The flushed container is checked and the [in Dutch: spoeltol] is removed from the manhole, after which the manhole is closed.

According to an embodiment, the liquid pharmachemical and/or fine chemical waste is supplied from the feed tank to an evaporator. The supply is preferably done by pumping. In a further embodiment, the evaporator is selected from the list of: a thin film evaporator, a falling film evaporator, a short path evaporator, or a batch evaporator, so that the liquid pharmachemical and/or fine chemical waste is fed from the feed tank to a thin film evaporator, a falling film evaporator, a short path evaporator, or a batch evaporator.

In an embodiment, the evaporator is part of a distillation installation which also comprises a condenser.

In a preferred embodiment, the liquid pharmachemical and/or fine chemical waste is pumped from the feed tank to the evaporator, wherein preferably an adjustable feed flow rate is set. The feed flow rate, with which the liquid pharmachemical and/or fine chemical waste is supplied from the feed tank to the evaporator, preferably the thin film evaporator, is preferably between 100 and 4000 kg/hour, more preferably between 200 and 3500 kg/hour, even more preferably between 300 and 3000 kg/hour, even more preferably between 400 and 2500 kg/hour, and most preferably between 500 and 2000 kg/hour.

The evaporator, preferably the thin film evaporator, is preferably heated with reduced steam to a pressure between 1 and 16 barg, more preferably between 2 and 6 barg, even more preferably between 3 and 5 barg, even more preferably between 3.6 and 4.4 barg.

In a preferred embodiment, the waste products are pumped from the feed tank to the thin film evaporator, wherein preferably an adjustable feed flow rate is set. The thin-film evaporator is a hollow tube encased in a heating jacket, in which scrapers spread the waste products as a thin film over the heated surface of the jacket. Due to the contact of the thin film with the warm wall, the solvent evaporates easily, while the residue settles. In this way, the evaporation is optimized both in terms of efficiency and in terms of duration. In the thin film evaporator, the heating preferably takes place with reduced steam at a pressure between 1 and 16 barg, more preferably between 2 and 6 barg, even more preferably between 3 and 5, even more preferably between 3.6 and 4.4 barg. Deposits of impurities in the liquid waste on the inside of the jacket of the thin film evaporator are prevented by means of scrapers present in the thin film evaporator.

In the evaporator, preferably the thin film evaporator, the liquid pharmachemical and/or fine chemical waste products are separated into a vapor fraction and a residual fraction. In a preferred embodiment, the vapor fraction comprises the organic solvents. The vapor fraction may also comprise water in addition to organic solvents. This will apply if the liquid pharmachemical and/or fine chemical wastes comprise water. In another or further preferred embodiment, the residual fraction comprises the noble metals.

The vapor fraction comprising evaporated organic solvents, and optionally water, is diverted from the evaporator, preferably the thin film evaporator, to a condenser, where the vapor fraction or part of the vapor fraction is concentrated to a liquid distillate. In an embodiment, the liquid distillate is discharged to a distillate buffer vessel. The cooling water for the condenser is preferably circulated, where it is cooled in the cooling tower. The residual vapor fraction that has not been condensed is preferably diverted to the gas network, after which it will be burned in rotary kilns. In an embodiment, a distillate pump controls the level in the distillate buffer vessel by pumping to the empty container. The distillate container is loaded via the bottom connection. While pumping the distillate, the distillate container is in contact with the shuttle gas. The collected distillate can then be recycled for reuse of the organic solvents in the pharmachemical and/or fine chemical industry. The distillate can also be burned for energy recovery.

In a preferred embodiment, a distillate is formed in the condenser, which is used for the recovery of organic solvents. The distillate can also be burned for energy recovery.

In a preferred embodiment, between 60 and 99.9 wt% of the liquid pharmachemical and/or fine chemical waste ends up in the distillate.

In an embodiment, in the thin film evaporator, the vapor fraction comprising evaporated organic solvents is diverted to a condenser, from which the liquid distillate is discharged to a distillate buffer vessel.

According to an embodiment, the cooling water for the condenser is circulated, whereby it is cooled in a cooling tower. According to another or further embodiment, the remaining vapor fraction that has not been condensed is diverted to the gas network, after which it will be burned in rotary kilns. According to an embodiment, a distillate pump controls the level in the distillate buffer vessel by pumping to the empty container. The distillate container is loaded via the bottom connection. While pumping the distillate, the distillate container is in contact with the shuttle gas. The collected distillate can then be recycled for reuse of the organic solvents in the pharmachemical and/or fine chemical industry. The distillate can also be burned for energy recovery.

According to an embodiment, the concentrated residual fraction formed after evaporation is collected at the bottom of the evaporator, preferably the thin film evaporator. The residue filling vessel is preferably equipped with a rupture disc, set at 0-1 barg. The residual fraction can then be discharged into the filling vessels for further upgrading.

According to an embodiment, the concentrated residual fraction formed after evaporation is collected at the bottom of the thin film evaporator. There is a rupture disc on the residue filling vessel, set to 0-1 barg, preferably 1 barg. The residual fraction can then be discharged into the filling vessels for further upgrading.

This method is particularly advantageous because by collecting the residual fraction and subsequently upgrading it, the loss of noble metals via liquid pharmachemical and/or fine chemical waste is minimized, so that they do not have to be purchased repeatedly from outside Europe. Moreover, in a preferred embodiment, this method combines both solvent recovery and recovery of noble metals from one waste stream. In this way an optimization of the processing of liquid pharmachemical and/or fine chemical waste is obtained where recovery of as many components as possible for reuse is central.

According to an embodiment, the liquid wastes are tested for reactivity and composition before they are accepted for processing and placed in the feed tank. Preferably, the waste is screened for composition and thermal stability. The screening may comprise, for example, adiabatic calorimeter testing and process simulations, but is not limited to these examples. Herewith, the quality of the waste can be determined, the processing can be optimized and liquid waste can be accepted or rejected.

According to an embodiment, while feeding the liquid waste into the feed tank, additives are added in the suction line of the discharge pump, such as, for example, but not limited to, a solution containing between 18 and 22% sodium hydroxide. The addition preferably takes place when, during the screening of the liquid waste, the pH of the liquid waste is outside the pH range of the evaporator, preferably the thin film evaporator. This pH range is between pH 2 and 4. For this purpose, the waste is also subjected to a compatibility test with [18-22]% sodium hydroxide and water. With the percentages stated above, percentages by weight are intended.

According to another embodiment, after feeding the liquid waste into the feed tank, additives are added to the feed tank, such as for instance, but not limited to, a solution containing between 18 and 22% sodium hydroxide. The addition preferably takes place when, during the screening of the liquid waste, the pH of the liquid waste is outside the pH range of the evaporator, preferably the thin film evaporator. This pH range is between pH 2 and 4. For this purpose, the waste is also subjected to a compatibility test with [18-22]% sodium hydroxide and water.

According to an embodiment, the residual fraction is collected in a buffer vessel before flowing on to the filling vessel. The buffer vessel functions as an intermediate storage so that the evaporator, preferably the thin film evaporator, can continue to operate when filling vessels are changed. The residue buffer vessel is electrically traced at 80°C and insulated. The residue is buffered and monitored via LIT and LSHH.

According to an embodiment, the filling of the residual fraction from the buffer tank into the filling vessel is done by gravity. This is advantageous because as a result no energy is required to pump the liquid waste. The filling zone is located below the residue buffer vessel. The filling vessel, into which the residual fraction will be filled, is connected to the gas network by means of a flexible pipe. Subsequently, a dip pipe is placed in the vessel to be filled. When the filling vessel is sufficiently filled, another filling vessel is connected in the same way, wherein the dip pipe and the exhaust gas hose are connected to the next filling vessel. When the four vessels are filled, the next four vessels are prepared. The filled vessels, with a residual fraction rich in noble metals, can then be subjected to further reprocessing to pure noble metals.

Further reprocessing may include thermal treatment of the residual fraction, such as for example incineration in a furnace, where metals are converted to metal oxides which are then present in a resultant ash. Afterwards, the metal oxides can be purified from the ash and converted back into metals for reuse as a catalyst. It should be understood that this is only an example and that essentially all possible reprocessing methods can be used in the present invention.

According to an embodiment, the liquid waste is supplied from the container via a feed tank to the evaporator, preferably the thin film evaporator, wherein liquid waste in the feed tank is stirred and/or recirculated. This embodiment is advantageous for ensuring good mixing of liquid waste with any added additives. According to an embodiment, a circulation pump in the feed tank provides a homogenized feed stream to the evaporator, preferably the thin film evaporator. According to another or further embodiment, an agitator in the feed tank provides a homogenized feed stream to the evaporator, preferably the thin film evaporator.

According to an embodiment, the gas network consists of a shuttle gas network which also serves to render the installation inert in order to prevent a combustible atmosphere. According to a preferred embodiment, the container, the feed tank, the evaporator, preferably the thin film evaporator, the condenser, the buffer vessel and the filling vessel are connected to the shuttle gas network. This ensures that the method can be carried out emission-free because there are no emission points. In addition, the backflow of the shuttle gas in the residue buffer vessel provides an extra driving force to allow the solvent vapors to move towards the shuttle gas. According to a further embodiment, the shuttle gas comprises nitrogen gas, which is relatively cheap and easy to obtain.

According to an embodiment, the evaporator, preferably the thin film evaporator, operates at a temperature between 100 and 220°C, more preferably at a temperature between 120 and 200°C, even more preferably between 150 and 180°C. It is important that the evaporator, preferably the thin film evaporator, operates in a wide temperature range so that all types of solvents and combinations of solvents can be evaporated.

According to an embodiment, the evaporator, preferably the thin-film evaporator, operates at atmospheric pressure, so that no energy has to be supplied to keep the evaporator, preferably the thin film evaporator, under pressure and the risk of explosions is also reduced. In a preferred embodiment, the evaporator operates at a pressure of between 0 and 100 mbarg, so that little energy has to be supplied to keep the evaporator under pressure and the risk of explosions is also reduced.

According to an embodiment, 90% of the liquid waste ends up in the distillate, which is then suitable for recovery of organic solvents for reuse in the pharmachemical and/or fine chemical industry. The distillate can be discharged back into the original container.

In a specific preferred embodiment, the method is a method for processing liquid pharmachemical and/or fine chemical waste comprising organic solvents and noble metals, in particular platinum-group metals, such as platinum, palladium, rhodium and/or ruthenium, comprising the following sequential steps:
- feeding pharmachemical and/or fine chemical liquid waste comprising organic solvents and noble metals into a container,
- introducing liquid waste from the container into a feed tank,
- feeding liquid waste from the feed tank to a thin film evaporator,
- discharging a vapor fraction, comprising organic solvents, to a condenser, wherein a distillate is formed, which is used for the recovery of organic solvents,
- collecting a concentrated residual fraction comprising noble metals,
wherein the collected concentrated residual fraction formed after evaporation of the organic solvents is used for the recovery of noble metals, in particular platinum-group metals, such as platinum, palladium, rhodium and/or ruthenium.

In a second aspect, the invention relates to a use of a method according to the first aspect for processing liquid pharmachemical and/or fine chemical waste.

This use results in an ecologically and economically advantageous processing of liquid waste from the pharmachemical and/or fine chemical industry because different fractions of the waste are recovered for further reprocessing with reuse in the pharmachemical and/or fine chemical industry as the aim. The use reduces the need to purchase valuable noble metals, in particular platinum-group metals, such as platinum, palladium, rhodium and/or ruthenium, from outside Europe. The use combines the recovery of these valuable noble metals with the recovery of organic solvents.

In a third aspect, the invention relates to residual fractions obtained using a method according to the first aspect.

In what follows, the invention is described by way of non-limiting figures illustrating the invention, and which are not intended to and should not be interpreted as limiting the scope of the invention.

### EXAMPLES AND DESCRIPTION OF THE FIGURES

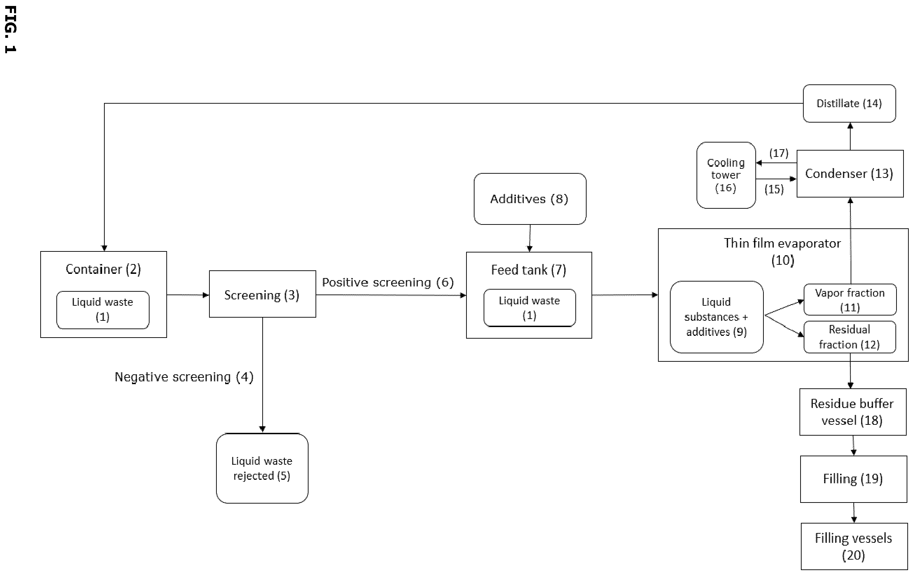

**Figure 1** shows a schematic representation of an embodiment of the present invention.

Liquid waste **1** is supplied in a container **2.** The liquid waste is screened **3** on composition and reactivity. If the screening is negative **4,** the liquid waste is rejected for processing **5.** With a positive screening **6,** the liquid waste **1** is transferred to a feed tank **7.** Additives **8** are added in the feed tank. The mixture of liquid substances and additives **9** is transferred to a thin film evaporator **10,** where the mixture of liquid substances and additives **9** is separated into a vapor fraction **11** and a residual fraction **12.** The vapor fraction is diverted to a condenser **13,** whereby a distillate **14** is obtained. The distillate is returned to container **2.** The cooling water **15** for the condenser **13** is supplied from a cooling tower **16** and circulated **17,** where it is cooled in the cooling tower **16.** The residual fraction **12** is collected in a residue buffer vessel **15.** From the residue buffer vessel **18,** the residual fraction **12** is filled **19** into filling vessels **20.**

### Example 1: recovery of palladium from a waste stream

A liquid waste stream comprising tetrahydrofuran as an organic solvent, originating from a process using palladium as a homogeneous catalyst, is fed to a thin film evaporator.

In the thin film evaporator, the waste stream is separated into a vapor fraction and a residual fraction. The residual fraction is collected and used for the recovery of palladium, for example by incineration of the residual fraction.

The vapor fraction is diverted to a condenser, where at least part of the gases are condensed and form a distillate. Herein, 87 wt% of the liquid waste stream ended up in the distillate. The distillate can be burned for energy recovery, sold as distillate or used for the purification of organic solvents.

### Example 2: recovery of palladium from a waste stream

A liquid waste stream comprising butanol, water, methyl tert-butyl ether (MTBE) and diisopropylethylamine, palladium and high-boiling components such as Active Pharmaceutical Ingredient (API) and reaction by-products is fed to a thin film evaporator.

In the thin film evaporator, the waste stream is separated into a vapor fraction and a residual fraction. The composition of the residual fraction and the vapor fraction are shown below:
- Vapor fraction: butanol, water, MTBE and diisopropylethylamine
- Residual fraction: residual butanol, water, MTBE and diisopropylethylamine, palladium and high-boiling components such as Active Pharmaceutical Ingredient (API) and reaction by-products

The residual fraction is collected and used for the recovery of palladium, for example by incineration of the residual fraction. The vapor fraction is diverted to a condenser, where at least part of the gases is condensed and form a distillate.

It is believed that the invention is not limited to the embodiments described above and that some modifications or changes may be added to the described examples and figures without revising the appended claims.

## Claims

1. Method for processing liquid pharmachemical and/or fine chemical waste comprising organic solvents and noble metals, in particular platinum-group metals, such as platinum, palladium, rhodium and/or ruthenium, comprising the steps of:
- introducing the liquid pharmachemical and/or fine chemical waste comprising organic solvents and noble metals into a feed tank;
- feeding the liquid pharmachemical and/or fine chemical waste from the feed tank to an evaporator selected from the list of: a thin film evaporator, a falling film evaporator, a short path evaporator, or a batch evaporator;
- discharging a vapor fraction, comprising organic solvents, to a condenser; and
- collecting a concentrated residual fraction,
wherein the collected concentrated residual fraction formed after evaporation of the organic solvents is used for the recovery of noble metals, in particular platinum-group metals, such as platinum, palladium, rhodium and/or ruthenium.

2. Method according to claim 1, wherein the evaporator is a thin film evaporator.

3. Method according to any of the preceding claims 1 or 2, wherein a distillate is formed in the condenser which is used for the recovery of organic solvents.

4. Method according to claim 3, wherein between 60 and 99.9 wt% of the liquid pharmachemical and/or fine chemical waste ends up in the distillate.

5. Method according to any of the preceding claims, wherein the noble metals comprise ruthenium.

6. Method according to any of the preceding claims, wherein the noble metals comprise palladium.

7. Method according to any of the preceding claims, wherein the vapor fraction also comprises water.

8. Method according to any of the preceding claims, wherein the method, prior to introducing the liquid pharmachemical and/or fine chemical waste into the feed tank, comprises the step of:
- feeding pharmachemical and/or fine chemical liquid waste comprising organic solvents and noble metals into a container, wherein the liquid waste from the container is placed in a feed tank.

9. Method according to any of the preceding claims, wherein the liquid pharmachemical and/or fine chemical waste is supplied from the feed tank to the evaporator with a feed flow rate of between 500 and 2000 kg/hour.

10. Method according to any of the preceding claims, wherein the liquid pharmachemical and/or fine chemical wastes originate from chemical processes using noble metals as catalysts, preferably homogeneous catalysts.

11. Method according to any of the preceding claims, **characterized in, that** the liquid waste is supplied from the container to the evaporator via a feed tank, wherein liquid waste in the feed tank is stirred and/or circulated.

12. Method according to any of the preceding claims, **characterized in, that** additives are added to the waste, preferably the additives are sodium hydroxide.

13. Method according to any of the preceding claims, **characterized in, that** the evaporator operates at a temperature between 100 and 220°C, more preferably at a temperature between 120 and 200°C.

14. Method according to any of the preceding claims, **characterized in, that** the evaporator operates at a pressure between 0 and 100 mbarg.

15. Use of a method according to any one of claims 1-14 for processing liquid waste and recovering a residual fraction.
